# DEMANDE DE BREVET EUROPEEN

(11) **EP 4 656 051 A1**
(43) Date de publication de la demande: **03.12.2025**
(21) Numéro de dépôt: 25178999.6
(22) Date de dépôt: 27.05.2025
(51) Int. Cl.: A01N 65/03, A01P 5/00

(54) **UTILISATION D'UN EXTRAIT D'AU MOINS UNE ALGUE ROUGE AGAROPHYTE COMME AGENT NÉMATOCIDE ET PROCÉDÉ DE LUTTE CONTRE LES NÉMATODES PHYTOPATHOGÈNES**

(30) Priorité: 27.05.2024 MA 65973
(71) Demandeur: STE D'ETUDES ET D'EXPLOITATION D'ALGUES ET PRODUITS MARITIME, 14000 Kenitra (MA)
(72) Inventeur: LEBBAR, Mohammed Rachid, RABAT (MA); LEBBAR, Mohamed Salim, KENITRA (MA)
(74) Mandataire: Cabinet Chaillot

(57) **Abrégé**

Utilisation d'un produit liquide aqueux d'extraction par une solution aqueuse alcaline d'au moins une algue rouge agarophyte de la famille des Gelidiaceae, telle que *Gelidium sesquipedale,* comme agent de lutte contre les nématodes phytopathogènes. Le produit d'extraction est notamment la phase aqueuse obtenue par extraction de ladite algue rouge par une solution aqueuse alcaline en faisant suivre par une filtration pour récupérer ladite phase aqueuse, laquelle peut ensuite avoir été concentrée, déshydratée ou lyophilisée, puis remise en solution dans de l'eau en vue de son application.

## Description

La présente invention porte sur l'utilisation d'un extrait d'au moins une algue rouge agarophyte pour lutter contre les nématodes qui parasitent les plantes, autrement dit les nématodes phytopathogènes, en particulier contre les nématodes à galles. Elle porte également sur un procédé de lutte contre les nématodes phytopathogènes.

Les nématodes phytopathogènes sont des organismes animaux simples, multicellulaires, composés en général de 1000 cellules environ. Ils ont la forme de vers ronds, cylindriques et allongés en fuseau, à symétrie bilatérale, non segmentés, mais sont taxonomiquement distincts des vers de terre, des vers fil de fer ou des vers plats. La plupart d'entre eux ont une taille microscopique, mesurant environ 0,3 à 12 mm de long sur environ 0,01 à 0,5 mm de diamètre, si bien qu'on les observe généralement au microscope ou à la loupe.

Les nématodes phytopathogènes attaquent les plantes, entre autres par leurs racines. Lorsque la plante est perforée par son stylet, le nématode injecte dans le tissu végétal des enzymes digestives produites par les glandes salivaires, puis aspire le produit de la digestion et le déverse dans l'intestin

Les symptômes d'une attaque de nématodes sur le système racinaire d'une plante sont l'apparition de galles ou de nodules, des lésions racinaires, une ramification excessive et un rabougrissement des racines, avec des dégâts constatés sur les extrémités. L'infection des racines entraîne aussi sont un lent déclin de la plante entière, qui tend à se flétrir même sur un sol suffisamment humide.

Pour lutter contre les nématodes phytopathogènes qui induisent donc pour l'agriculteur une diminution de la quantité et du rendement des récoltes, on peut utiliser des cultivars résistants aux nématodes ou avoir recours à des prédateurs ou des agents pathogènes naturels des nématodes. C'est la lutte biologique.

On peut également alterner des cultures sensibles aux nématodes et des cultures non-hôtes, la difficulté étant que certaines espèces de nématodes ont des gammes d'hôtes très vastes. C'est la lutte culturale.

On peut aussi faire appel à des produits de synthèse antiparasites nématocides, fumigants ou non-fumigants, généralement très efficaces, mais la plupart de ces produits ont été progressivement interdits car ils présentent des effets secondaires néfastes pour la santé de l'homme et son environnement. C'est la lutte chimique.

En pratique, on utilise une combinaison de ces différentes méthodes.

La Société déposante a maintenant découvert qu'un extrait particulier d'au moins une algue rouge agarophyte de la famille des Gelidiaceae, telle que *Gelidium sesquipedale,* qui est une algue rouge notamment du littoral marocain, présente une excellente activité nématocide.

La présente invention a donc d'abord pour objet l'utilisation d'un produit liquide aqueux d'extraction par une solution aqueuse alcaline d'au moins une algue rouge agarophyte de la famille des Gelidiaceae comme agent de lutte contre les nématodes phytopathogènes.

En particulier, la ou les algues rouges agarophytes peuvent être choisies parmi *Gelidiella acerosa, Gelidium amansii, Gelidium cartilagineum, Gelidium liatulum, Gelidium pacificum, Gelidium lingulatam, Gelidium sesquipedale* et *Gelidium pristoides.*

Conformément à un mode de réalisation particulier, le produit d'extraction est la phase aqueuse obtenue par extraction de ladite algue rouge par une solution aqueuse alcaline en faisant suivre par une filtration pour récupérer ladite phase aqueuse, laquelle peut ensuite avoir été concentrée, déshydratée ou lyophilisée, puis remise en solution dans de l'eau en vue de son application.

L'extraction a en particulier été conduite à la température ambiante, pendant 30 minutes - 8 heures, ladite algue rouge ayant été employée à raison de 600-900kg dans 10-20m³ de solution aqueuse alcaline.

Pour l'extraction, on a utilisé en particulier une solution aqueuse alcaline à 0,1 - 20 % en poids, de préférence, 1 à 5 % en poids d'hydroxyde de sodium ou d'hydroxyde de potassium.

La phase aqueuse alcaline obtenue après filtration peut avoir été neutralisée par un acide, en particulier l'acide nitrique, l'acide sulfurique ou l'acide phosphorique.

Le produit liquide aqueux d'extraction est notamment appliqué en arrosage des plantes à protéger ou en apport au sol ou au substrat, notamment par arrosage, sur lequel on envisage la culture des plantes à protéger.

La présente invention a également pour objet un procédé de lutte contre les nématodes phytopathogènes, caractérisé par le fait que l'on applique le produit liquide aqueux d'extraction tel que défini ci-dessus sur le sol ou le substrat sur lequel les plantes à protéger sont installées ou sur lequel on envisage l'installation des plantes à protéger.

Les plantes sont notamment choisies parmi les plantes maraîchères, telles que la tomate, le melon, les salades comme les laitues, les épinards, les haricots, les arbres fruitiers, tels que les bananiers, les avocatiers, les poiriers, les pommiers, les nectariniers, les plantes ornementales, les plantes horticoles, telles que les rosiers, les plantes prairiales, les plantes de grande culture.

On applique avantageusement le produit liquide aqueux d'extraction dilué à 0,5 à 100 mL pour 1000L d'eau.

On peut appliquer le produit liquide aqueux d'extraction à raison de 1 à 10 litres par hectare.

On peut appliquer le produit liquide d'extraction à raison de 1 à 7 fois par semaine, notamment pendant 1 à 40 semaines.

Les exemples suivants illustrent la présente invention sans toutefois en limiter la portée.

### Exemples 1 à 4 : Préparation d'un extrait par traitement alcalin de Gelidium sesquipedale

On a placé 800 kg de l'algue rouge *Gelidium sesquipedale* dans 20 m³ d'eau.

On a conduit un traitement alcalin en y ajoutant du NaOH pour une concentration à 3 % en masse à température ambiante et en agitant pendant 2 heures.

Ensuite on a filtré sur filtre de 0,1 micron pour récupérer la partie liquide dans une quantité de 19 m³.

Ce produit liquide nommé L1 (Exemple 1) présente un pH basique.

Il a été neutralisé à pH 7 par de l'acide sulfurique, on le nomme L1SL (Exemple 2). Il a également été possible de le neutraliser à l'acide nitrique, on le nomme L1NL (Exemple 3). Par ailleurs, il a aussi été neutralisé à l'acide phosphorique, on le nomme L1PL (Exemple 4).

### Exemple 5 : Procédure de dilution des produits liquides L1, L1SL, L1NL et L1PL

Nous avons dilué les produits L1, L1SL, L1NL et L1PL (neutralisé à l'acide phosphorique) à 0,01, 0,1 et 0,2 % selon les quantités indiquées dans le Tableau 1 suivant.

Les dilutions ont été faites dans un volume de 10 litres d'eau. Ce volume correspond à la contenance de la machine à dos utilisée pour la pulvérisation.

**Tableau 1**

| Concentration (%) | Volume solution-mère (concentrée) | Volume eau arrosage |
|---|---|---|
| 0,1 | 10mL | 10L |
| 0,2 | 20mL | 10L |
| 0,5 | 50mL | 10L |
| 1 | 100mL | 10L |

Pour une dilution à 0,01 % dans 10L d'eau d'arrosage :
- on a agité la solution-mère (concentrée, de départ) pendant 5 minutes afin de l'homogénéiser au cas où il y aurait une décantation ;
- on a rempli la machine à traiter avec 10 litres d'eau d'arrosage qui est puisée du puits - dont nous avons mesuré le pH et la conductivité - et on a ajouté 10 mL de solution-mère prélevés avec la pipette de précision, on a mélangé avant traitement.

Pendant le traitement, on a agité avant chaque arrosage afin d'avoir toujours une solution homogène.

### Exemple 6 : Effet sur la réduction des nématodes de L1, L1SL, L1PL et L1NL à différentes concentrations

On a conduit 10 essais comparatifs, chacun avec 20 laitues, à savoir 4 laitues témoins arrosées avec de l'eau, 4 laitues arrosées avec L1 dilué à 4 concentrations, 4 laitues arrosées avec L1SL à 4 concentrations, 4 laitues arrosées avec L1PL à 4 concentrations et 4 laitues arrosées avec L1NL à 4 concentrations.

A chaque arrosage, on a versé 40 mL d'eau ou de produit liquide aqueux d'extraction sur chaque laitue.

On a procédé aux arrosages une fois par semaine, pendant 4 semaines.

Au bout de 30 jours, on a arraché les laitues et compté le nombre de galles sur les racines.

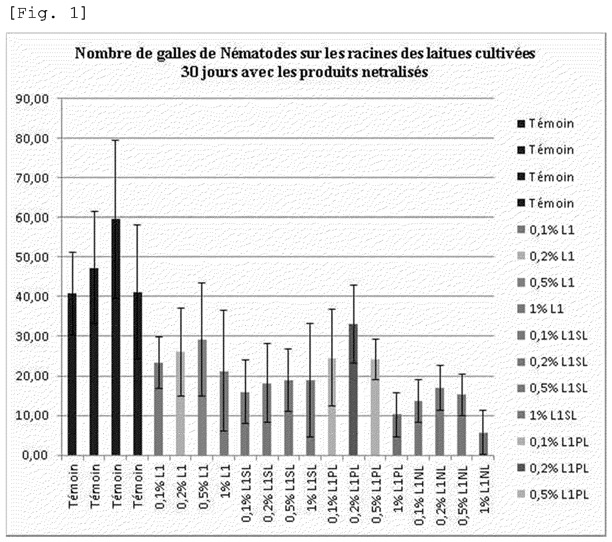

Les résultats sont rassemblés dans le Tableau 2 ci-après et repris sous forme de schémas sur la Figure 1 du dessin annexé. On peut constater que tous les produits liquides de l'invention ont une activité de réduction des nématodes dès leur dilution au 1/1000.

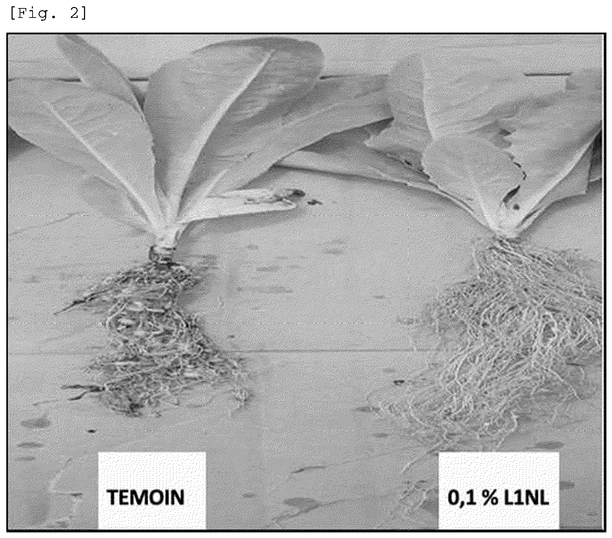

La Figure 2 du dessin annexé montre deux photos de laitues, l'une (à gauche) non traitée, et l'autre (à droite) traitée par 0,1%L1NL dans les conditions ci-dessus au bout de 30 jours. On remarque que la coloration noire des racines, provenant d'une infection aux nématodes, a disparu dans le cas de la laitue traitée.

**Tableau 2**

| Nombre de galles de Nématodes sur les racines des laitues cultivées 30 jours avec les produits netralisés | | | | | | | | | | | | | | | | | | | | |
|---|---|---|---|---|---|---|---|---|---|---|---|---|---|---|---|---|---|---|---|---|
| Nbr Jours | Témoi n | Témoi n | Témoi n | Témoin | 0,1% L1 | 0,2% L1 | 0,5% L1 | 1% L1 | 0,1% L1SL | 0,2% L1SL | 0,5% L1SL | 1% L1SL | 0,1% L1PL | 0,2% L1PL | 0,5% L1PL | 1% L1PL | 0,1% L1NL | 0,2% L1NL | 0,5% L1NL | 1% L1NL |
| 30 | 39 | 54 | 74 | 30 | 25 | 29 | 35 | 5 | 14 | 3 | 10 | 9 | 29 | 36 | 19 | 5 | 9 | 20 | 21 | 2 |
| 30 | 29 | 39 | 86 | 69 | 14 | 32 | 58 | 29 | 11 | 8 | 23 | 20 | 27 | 26 | 24 | 7 | 11 | 7 | 24,00 | 11 |
| 30 | 43 | 34 | 98 | 54 | 15 | 43 | 22 | 17 | 13 | 21 | 17 | 5 | 38 | 31 | 32 | 9 | 16 | 18 | 8,00 | 7 |
| 30 | 27 | 41 | 47 | 20 | 28 | 36 | 24 | 24 | 7 | 17 | 16 | 32 | 13 | 48 | 30 | 5 | 10 | 26 | 14 | 6 |
| 30 | 44 | 48 | 53 | 48 | 28 | 19 | 36 | 10 | 15 | 38 | 27 | 14 | 6 | 24 | 26 | 10 | 9 | 16 | 12 | 0 |
| 30 | 32 | 26 | 43 | 38 | 18 | 8 | 28 | 2 | 22 | 26 | 36 | 52 | 47 | 17 | 16 | 7 | 11 | 12 | 9 | 4 |
| 30 | 41 | 42 | 37 | 14 | 20 | 19 | 3 | 35 | 13 | 18 | 17 | 18 | 13 | 46 | 22 | 7 | 17 | 16 | 17 | 0 |
| 30 | 49 | 68 | 46 | 55 | 35 | 36 | 21 | 46 | 16 | 22 | 10 | 3 | 26 | 41 | 28 | 13 | 27 | 13 | 12 | 1 |
| 30 | 63 | 71 | 57 | 36 | 26 | 24 | 26 | 7 | 12 | 9 | 14 | 15 | 22 | 32 | 26 | 20 | 14 | 25 | 19 | 9 |
| 30 | 40,78 | 49 | 55 | 48 | 24 | 14 | 38 | 37 | 36 | 20 | 18,89 | 21 | 24,56 | 30 | 19 | 19 | 12,00 | 17 | 16 | 17 |
| Moyenn e | 40,78 | 47,20 | 59,60 | 41,20 | 23,30 | 26,00 | 29,10 | 21,20 | 15,90 | 18,20 | 18,89 | 18,90 | 24,56 | 33,10 | 24,20 | 10,20 | 13,60 | 17,00 | 15,20 | 5,70 |
| Ecarttype | 10,46 | 14,16 | 19,95 | 16,90 | 6,55 | 11,08 | 14,26 | 15,27 | 8,03 | 10,00 | 7,98 | 14,36 | 12,16 | 9,81 | 5, 18 | 5,45 | 5,46 | 5,75 | 5, 18 | 5,50 |

## Revendications

1. - Utilisation d'un produit liquide aqueux d'extraction par une solution aqueuse alcaline d'au moins une algue rouge agarophyte de la famille des Gelidiaceae comme agent de lutte contre les nématodes phytopathogènes.

2. - Utilisation selon la revendication 1, **caractérisée par le fait que** la ou les algues rouges agarophytes sont choisies parmi *Gelidiella acerosa, Gelidium amansii, Gelidium cartilagineum, Gelidium liatulum, Gelidium pacificum, Gelidium lingulatam, Gelidium sesquipedale* et *Gelidium pristoides.*

3. - Utilisation selon l'une des revendications 1 et 2, **caractérisée par le fait que** le produit d'extraction est la phase aqueuse obtenue par extraction de ladite ou desdites algues rouges par une solution aqueuse alcaline en faisant suivre par une filtration pour récupérer ladite phase aqueuse, laquelle peut ensuite avoir été concentrée, déshydratée ou lyophilisée, puis remise en solution dans de l'eau en vue de son application.

4. - Utilisation selon la revendication 3, **caractérisée par le fait que** l'extraction a été conduite à la température ambiante, pendant 30 minutes - 8 heures, ladite algue rouge ayant été employée à raison de 600-900kg dans 10-20m³ de solution aqueuse alcaline.

5. - Utilisation selon l'une des revendications 3 et 4, **caractérisée par le fait que**, pour l'extraction, on a utilisé une solution aqueuse alcaline à 0,1 - 20 % en poids, de préférence, 1 à 5 % en poids d'hydroxyde de sodium ou d'hydroxyde de potassium.

6. - Utilisation selon l'une des revendications 3 à 5, **caractérisée par le fait que** la phase aqueuse alcaline obtenue après filtration a été neutralisée par un acide, en particulier l'acide nitrique, l'acide sulfurique ou l'acide phosphorique.

7. - Utilisation selon l'une des revendications, 1 à 6, **caractérisé par le fait que** le produit liquide aqueux d'extraction est appliqué en arrosage des plantes à protéger ou en apport au sol ou au substrat, notamment par arrosage, sur lequel on envisage la culture des plantes à protéger.

8. - Procédé de lutte contre les nématodes phytopathogènes, **caractérisé par le fait que** l'on applique le produit liquide aqueux d'extraction tel que défini à l'une des revendications 1 à 7 sur le sol ou le substrat sur lequel les plantes à protéger sont installées ou sur lequel on envisage l'installation des plantes à protéger.

9. - Procédé selon la revendication 8, **caractérisé par le fait que** les plantes sont choisies parmi les plantes maraîchères, telles que la tomate, le melon, les salades comme les laitues, les épinards, les haricots, les arbres fruitiers, tels que les bananiers, les avocatiers, les poiriers, les pommiers, les nectariniers, les plantes ornementales, les plantes horticoles, telles que les rosiers, les plantes prairiales, les plantes de grande culture.

10. - Procédé selon l'une des revendications 8 et 9, **caractérisé par le fait que** l'on applique le produit liquide aqueux d'extraction dilué à 0,5 à 100 mL pour 1000L d'eau.

11. - Procédé selon l'une des revendications 8 à 10, **caractérisé par le fait que** l'on applique le produit liquide aqueux d'extraction à raison de 1 à 10 litres par hectare.

12. - Procédé selon l'une des revendications 8 à 11, **caractérisé par le fait que** l'on applique le produit liquide d'extraction à raison de 1 à 7 fois par semaine, notamment pendant 1 à 40 semaines.
